# EUROPEAN PATENT APPLICATION

(11) **EP 4 804 589 A1**
(43) Date of publication of application: **09.09.2026**
(21) Application number: 24885259.2
(22) Date of filing: 22.08.2024
(51) Int. Cl.: H04W 24/00, H04L 41/14, H04L 41/16

(54) **NETWORK NODE OF MOBILE COMMUNICATION NETWORK, SERVER, AND COMPUTER-READABLE STORAGE MEDIUM**

(30) Priority: 30.10.2023 JP 2023185751
(71) Applicant: KDDI Corporation, Tokyo 163-8003 (JP)
(72) Inventor: ITAHARA, Souhei, Fujimino-shi Saitama 356-8502 (JP); SUZUKI, Masaki, Fujimino-shi Saitama 356-8502 (JP); SUZUKI, Akito, Fujimino-shi Saitama 356-8502 (JP)
(74) Representative: Mathys & Squire
(86) International application number: PCT/JP2024/029827
(87) International publication number: WO 2025/094482

(57) **Abstract**

A network node of a mobile communication network, includes: processing means that performs processes including obtaining intermediate information, which is an output of a first learning model, by using first information collected in the mobile communication network as input to the first learning model, and assigning a first identifier to the intermediate information; and transmission means that transmits the intermediate information and the first identifier assigned to the intermediate information to a server deployed in an external network of the mobile communication network.

## Description

### TECHNICAL FIELD

The present disclosure relates to a technique for utilizing a learning model in a mobile communication system.

### BACKGROUND ART

NPL 1 discloses a configuration for data analytics services in a mobile communication network. According to NPL 1, an Application Function (AF), which is a service consumer, establishes a subscription by subscribing to the data analytics service provided by the mobile communication network. Note that the AF may be implemented on a server located in an external Data Network (DN) connected to the mobile communication network, such as the Internet. The core network of the mobile communication network includes a Network Data Analytics Function (NWDAF). The NWDAF is one of various Network Functions (NFs) deployed in the core network. The NWDAF performs analytics using a learning model and sends the analysis results to the AF that has established the subscription.

A server implementing the AF may be operated by a service provider that provides a specific service, such as a video streaming service, to wireless devices (WDs) of the mobile communication network. By subscribing the AF (server) to the data analytics service, the service provider can obtain analysis results from the mobile communication network regarding the Quality of Experience (QoE) perceived by users of WDs utilizing the service of the service provider.

Note that, for estimating the Quality of Experience of a service, information held by NFs of the mobile communication network (hereinafter referred to as NW information) and information held by the service provider, such as data related to the application to access the service (hereinafter referred to as APP information) are utilized. Accordingly, the NWDAF performs inference using the NW information collected from each NF within the mobile communication network and the APP information notified by the AF as input to the learning model, and then notifies the AF of the result (analysis result).

Here, various indicators exist for the Quality of Experience, and it is possible that the QoE indicators that the NWDAF can provide to the AF as analysis results differ from those the service provider wishes to obtain. As a solution to this issue, a configuration can be considered in which the AF performs analytics using a learning model. However, in this case, the NWDAF must send the NW information to the AF for inference execution at the AF. However, the NW information directly represents data such as the structure and state of the mobile communication network, and there may be cases where exposing the NW information externally is not permissible.

### CITATION LIST

### NON PATENT LITERATURE

NPL 1: 3GPP TS 23. 288, V18. 3. 0, September 2023
NPL 2: 3GPP S2-2306424

### SUMMARY OF INVENTION

### TECHNICAL PROBLEM

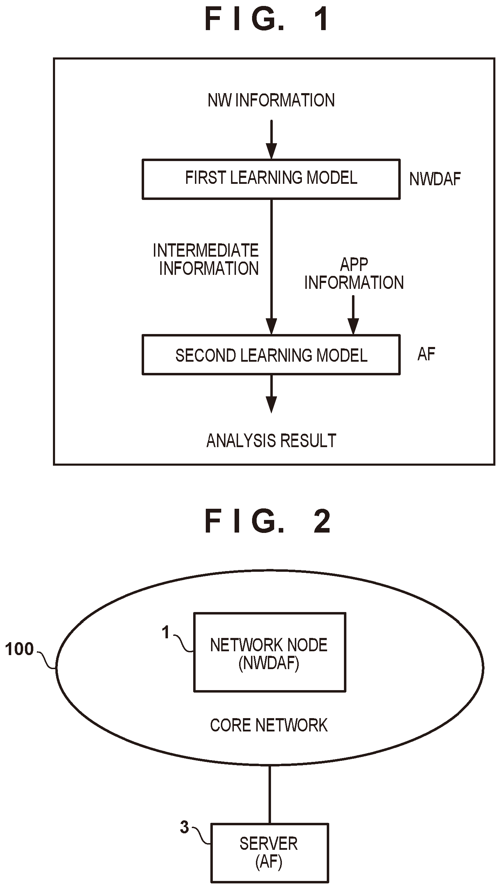

To enable obtaining analysis results at the AF without transmitting the NW information itself to the AF, a configuration such as Vertical Federated Learning (VFL) disclosed in NPL 2 can be applied. Specifically, as shown in FIG. 1, a first learning model is deployed at the NWDAF, and a second learning model is deployed at the AF. The NWDAF generates intermediate information by inputting the NW information into the first learning model and transmits the intermediate information to the AF. The AF performs inference by inputting the intermediate information obtained from the NWDAF and the APP information collected by the AF into the second learning model. By applying the VFL configuration, it is possible to perform inference at the AF while ensuring that the information transmitted from the NWDAF to the AF is intermediate information different from the NW information. The first learning model and the second learning model may be generated based on a learning model that performs inference using the NW information and the APP information as inputs.

In the configuration of FIG. 1, for updating (learning) the first learning model and the second learning model, the AF needs to determine the error of the output of the second learning model to update the second learning model, as well as calculate the error of the intermediate information and feedback this error of the intermediate information to the NWDAF. Note that the NWDAF updates the first learning model based on the error of the intermediate information.

However, NPL 1 does not define any procedure for deploying two associated learning models (the above-mentioned first learning model and second learning model) at the NWDAF and the AF that has established a subscription to the service provided by the NWDAF, nor any procedure for updating these two learning models based on VFL.

### SOLUTION TO PROBLEM

According to an aspect of the present disclosure, a network node of a mobile communication network, includes: processing means that performs processes including obtaining intermediate information, which is an output of a first learning model, by using first information collected in the mobile communication network as input to the first learning model, and assigning a first identifier to the intermediate information; and transmission means that transmits the intermediate information and the first identifier assigned to the intermediate information to a server deployed in an external network of the mobile communication network.

### ADVANTAGEOUS EFFECTS OF INVENTION

According to the present disclosure, a mechanism is provided that enables VFL between a network node of a mobile communication network and a server external to the mobile communication network.

Other features and advantages of the present invention will become apparent from the following description with reference to the accompanying drawings. In the accompanying drawings, the same or similar components are denoted by the same reference numerals.

### BRIEF DESCRIPTION OF DRAWINGS

FIG. 1 is a diagram illustrating VFL.
FIG. 2 is a system configuration diagram.
FIG. 3 is a diagram illustrating an example sequence.
FIG. 4 is a diagram illustrating an example sequence.
FIG. 5 is a diagram illustrating an example configuration of a network node.
FIG. 6 is a diagram illustrating an example configuration of a server.

### DESCRIPTION OF EMBODIMENTS

The embodiments are described in detail below with reference to the accompanying drawings. The following embodiments do not limit the invention of the claims, and not all of the combinations of features described in the embodiments are essential to the invention. Two or more of the features described in the embodiments may be arbitrarily combined. The same reference number is used for the same or similar element, and duplicated explanations are omitted.

### First Embodiment

FIG. 2 is a configuration diagram of a communication system according to the present embodiment. According to FIG. 2, a core network 100 of the mobile communication network includes a network node 1. The network node 1 may be an apparatus implementing the NWDAF function described above. Although not shown in figures, the core network 100 also includes various types of network functions other than the NWDAF. Furthermore, in FIG. 2, a server 3 is deployed in an external data network (DN) connected to the core network 100, such as the Internet. The server 3 may be an apparatus implementing the AF described above and may be operated by a service provider that provides services such as a video streaming service to wireless devices (WDs) of the mobile communication network.

In the present embodiment, two learning models that operate cooperatively are used so that the server 3 can perform inference based on NW information that the network node 1 can collect and APP information held by the server 3. The first learning model, which is one of the two learning models, is deployed at the network node 1, and the other second learning model is deployed at the server 3. The network node 1 inputs the NW information into the first learning model and obtains intermediate information output by the first learning model. The network node 1 transmits the intermediate information to the server 3. The server 3 obtains analysis results output from the second learning model, such as QoE of a user of a WD, by inputting the APP information and the intermediate information from the network node 1 into the second learning model. Note that the APP information may include not only information held by the server 3 but also information collected by the server 3 from outside the mobile communication network.

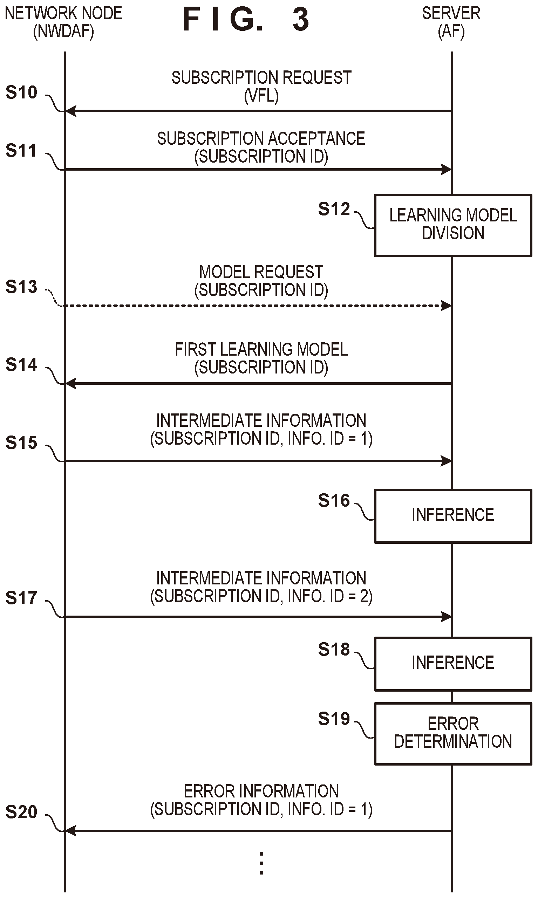

FIG. 3 is a sequence diagram according to the present embodiment. In FIG. 3, the server 3 and the network node 1 are assumed to exchange messages directly. However, the configuration may be such that the server 3 and the network node 1 exchange messages via another apparatus, such as an apparatus implementing a Network Exposure Function (NEF). In this case, the other apparatus may either forward the message received from one of the server 3 and the network node 1 to the other as is, or send another message to the other that conveys the content of the message received from one of the server 3 and the network node 1.

S10 and S11 correspond to a process in which the server 3 establishes a subscription for an analytics service with the mobile communication network (subscription establishment process). In S10, the server 3 sends a subscription request message to the network node 1. The subscription request message may be, for example, Nnwdaf_AnalyticsSubscription_Subscribe.

In the present embodiment, the subscription request message in S10 includes a parameter "VFL" to indicate to the network node 1 that, instead of receiving analysis results from the network node 1, the network node 1 will use the first learning model and the server 3 will use the second learning model, and the server 3 requests to receive intermediate information from the network node 1. In response to the subscription request message, the network node 1 sends a subscription acceptance message to the server 3 in S11. The subscription acceptance message includes a subscription ID for identifying the established subscription.

In the present embodiment, the network node 1 determines the subscription ID and notifies the server 3, but the configuration may alternatively allow the server 3 to determine the subscription ID. In this case, the server 3 may include the subscription ID in the subscription request message. In this case, the processing in S11 may be omitted.

In the present embodiment, the server 3 holds the learning model from which the first and second learning models are derived. The learning model outputs, for example, QoE inference results based on the NW information and the APP information. In S12, the server 3 generates the first learning model for use by the network node 1 and the second learning model for use by the server 3 based on the learning model. The first learning model outputs the intermediate information based on the NW information. The second learning model outputs inference results based on the intermediate information and the APP information. Note that the process in S12 may be performed before the sequence shown in FIG. 3 begins.

S13 and S14 correspond to a learning model distribution process. In S13, the network node 1 sends a model request message to the server 3 to request the first learning model. The model request message includes the subscription ID to allow the server 3 to recognize which subscription the model request relates to. In response to the model request message, the server 3 sends the first learning model to the network node 1 in S14. The message for sending the first learning model also includes the subscription ID to allow the network node 1 to recognize which subscription the message relates to.

In the present embodiment, the network node 1 sends the model request message to the server 3, and the server 3 sends the first learning model to the network node 1 in response; however, the configuration may alternatively allow the server 3 to send the first learning model to the network node 1 without receiving a request. In that case, the processing in S13 is omitted.

From S15 onward, the process corresponds to inference and learning model update. In S15, the network node 1 sends a message including intermediate information output by the first learning model by inputting the current NW information into the first learning model. At this time, the network node 1 includes in the message an information ID for identifying the intermediate information and the subscription ID indicating which subscription the message relates to. According to FIG. 3, the network node 1 sets the information ID of the intermediate information sent in S15 to "1." In S16, the server 3 performs inference using the second learning model based on the intermediate information with information ID "1" and the current APP information, for example, to infer QoE for a user of a specific WD.

In S17, the network node 1 sends intermediate information output by the first learning model based on the current NW information to the server 3. According to FIG. 3, the network node 1 sets the information ID of the intermediate information sent in S17 to "2." In S18, the server 3 performs inference using the second learning model based on the intermediate information with information ID "2" and the current APP information, for example, to infer QoE for a user of a specific WD.

In S19, the server 3 evaluates the error of the QoE inference result in S16 and updates the second learning model using, for example, backpropagation, while also determining the error of the intermediate information with information ID "1." Then, in S20, the server 3 sends a message including error information indicating the error of the intermediate information to the network node 1. At this time, the server 3 includes the information ID and subscription ID in the message so that the network node 1 can identify which intermediate information the error relates to. Since the error information sent in S20 relates to the intermediate information with information ID "1" received in S15, the information ID with value "1"is included in S20. Although not shown in the figure, the network node 1 updates the first learning model based on the error of the intermediate information received in S20. Furthermore, although not shown in the figure, similar processing corresponding to S19 and S20 is performed for the intermediate information with information ID "2." If the information ID is determined to be unique across all subscriptions processed by the network node 1 rather than unique within a subscription, the messages in S15, S17, and S20 need not include the subscription ID.

As described above, in the present embodiment, the subscription ID is determined when the subscription is established, and the learning models are distributed using this subscription ID. With this configuration, both the first learning model used by the network node 1 and the second learning model used by the server 3 are associated with the same subscription ID. In other words, the two learning models that operate cooperatively are associated via the subscription ID. Thus, one of the two learning models that operate cooperatively can be deployed at the network node 1 and the other at the server 3. In addition, each piece of intermediate information sent by the network node 1 includes an information ID. This allows the network node 1 to identify which intermediate information the error information relates to, thereby enabling VFL.

### Second Embodiment

Next, the second embodiment will be described, focusing on differences from the first embodiment. In the first embodiment, the server 3 held the learning model from which the first and second learning models were derived, and the server 3 transmitted the first learning model to the network node 1. In the present embodiment, the network node 1 holds the learning model from which the first and second learning models are derived, and the network node 1 transmits the second learning model to the server 3.

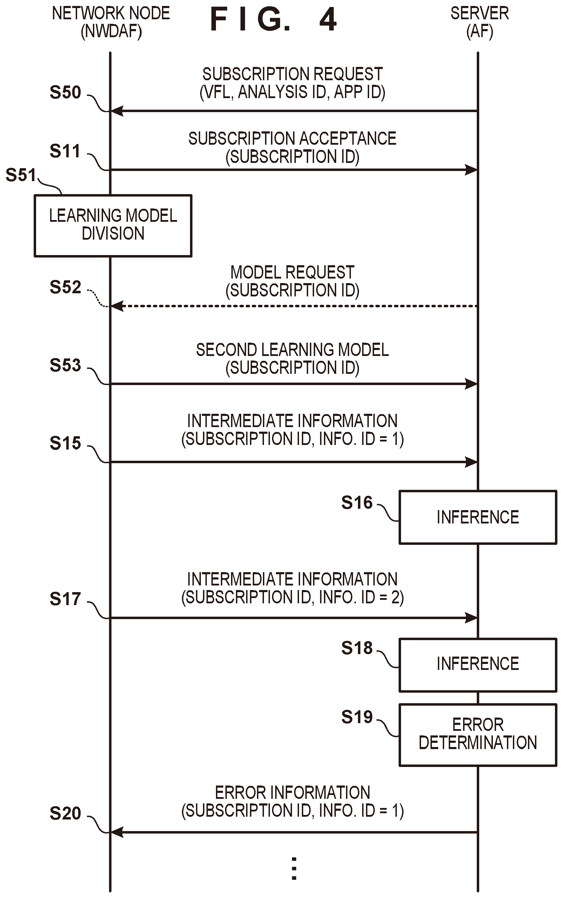

FIG. 4 is a sequence diagram according to the present embodiment. S50 and S11 correspond to a process in which the server 3 establishes a subscription for an analytics service with the mobile communication network (subscription establishment process). In S50, the server 3 sends a subscription request message to the network node 1. The subscription request message includes, in addition to the parameter "VFL," an analysis ID and an application ID (App ID). The analysis ID indicates the content to be analyzed (inferred), and the App ID indicates the application used by the service that is the subject of the analysis (inference). The network node 1 determines which learning model to use based on the combination of the analysis ID and the App ID. Accordingly, in S51, the network node 1 generates the first learning model and the second learning model based on the learning model determined according to the combination of the analysis ID and the App ID.

S52 and S53 correspond to a learning model distribution process. In S52, the server 3 sends a model request message requesting the second learning model to the network node 1. The model request message includes the subscription ID to allow the network node 1 to recognize which subscription the model request relates to. In response to the model request message, the network node 1 sends the second learning model to the server 3 in S53. The message for sending the second learning model also includes the subscription ID to allow the server 3 to recognize which subscription the message relates to.

In the present embodiment as well, the network node 1 determines the subscription ID and notifies the server 3, but the configuration may alternatively allow the server 3 to determine the subscription ID. Further, in the present embodiment, the server 3 sends the model request message to the network node 1, and the network node 1 sends the second learning model to the server 3 in response; however, the configuration may alternatively allow the network node 1 to send the second learning model to the server 3 without receiving a request. In that case, the processing in S52 is omitted.

The processing from S15 onward is the same as in the first embodiment.

As described above, in the present embodiment as well, the subscription ID is determined when the subscription is established, and the learning models are distributed using this subscription ID. With this configuration, both the first learning model used by the network node 1 and the second learning model used by the server 3 are associated with the same subscription ID. In other words, the two learning models that operate cooperatively are associated via the subscription ID. Thus, one of the two learning models that operate cooperatively can be deployed at the network node 1 and the other at the server 3. Furthermore, by including the subscription ID in the model request message, the information for identifying the learning model, i.e. the analysis ID and the App ID, can be omitted from the model request message. In addition, each piece of intermediate information sent by the network node 1 includes an information ID. This allows identification of which intermediate information the error information relates to, thereby enabling VFL.

### Apparatus Configuration

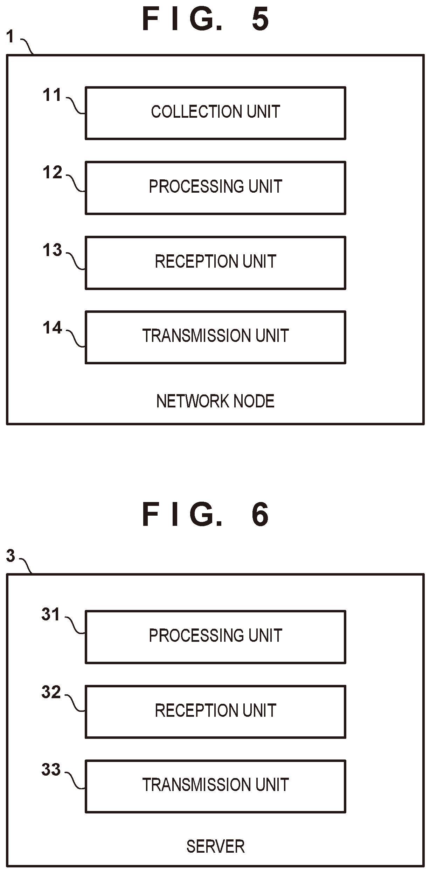

FIG. 5 is a configuration diagram of the network node 1 according to some embodiments. The network node 1 includes, for example, one or more processors and one or more memory devices. The one or more memory devices may include volatile memory devices and non-volatile memory devices. Each functional block shown in FIG. 5 may be realized when the one or more processors execute a computer program stored in the one or more memory devices. The network node 1 may be implemented as a single apparatus. Alternatively, the network node 1 may be implemented by a plurality of apparatuses that are capable of communicating with each other.

A collection unit 11 collects the NW information from each apparatus of the mobile communication network. A processing unit 12 manages subscriptions for services provided. Note that a subscription ID (second identifier) is assigned as described above when a subscription is established. The processing unit 12 holds the first learning model. Note that, in the first embodiment, the first learning model is received from the server 3. Furthermore, in the second embodiment, the first learning model is generated by the processing unit 11 based on a learning model held by the processing unit 11. The processing unit 11 obtains intermediate information output by the first learning model by inputting NW information into the first learning model. The processing unit 11 also performs processing to assign an information ID (first identifier) to each piece of intermediate information output by the first learning model.

A transmission unit 14 transmits the intermediate information and the information ID assigned to the intermediate information to the server 3. A reception unit 13 receives error information and the information ID assigned to the error information from the server 3. When the reception unit 13 receives error information, the processing unit 12 determines, based on the information ID assigned to the error information, which intermediate information transmitted to the server 3 the error information relates to, and updates the first learning model.

FIG. 6 is a configuration diagram of the server 3 according to some embodiments. The server 3 includes, for example, one or more processors and one or more memory devices. The one or more memory devices may include volatile memory devices and non-volatile memory devices. Each functional block shown in FIG. 6 may be realized when the one or more processors execute a computer program stored in the one or more memory devices. Further, the server 3 may be implemented as a single apparatus. Alternatively, the server 3 may be implemented by a plurality of apparatuses that are capable of communicating with each other.

A processing unit 31 manages subscriptions for services. Note that a subscription ID (second identifier) is assigned as described above when a subscription is established. The processing unit 31 holds the second learning model. Note that, in the first embodiment, the second learning model is generated by the processing unit 31 based on a learning model held by the processing unit 31. Furthermore, in the second embodiment, the second learning model is received from the network node 1.

A reception unit 32 receives intermediate information and the information ID (first identifier) assigned to the intermediate information from the network node 1. When the reception unit 32 receives the intermediate information, the processing unit 31 performs inference by inputting the received intermediate information and APP information into the second learning model. Then, the processing unit 31 performs processing to update the second learning model based on the inference error and to determine the error of the intermediate information that was input to the second learning model. The processing unit 31 also determines the information ID assigned to the intermediate information for which the error was determined and notifies a transmission unit 33 of the error information indicating the determined error and the determined information ID. The transmission unit 33 transmits the error information and the information ID notified by the processing unit 31 to the network node 1.

According to the present disclosure, a computer program and a computer readable storage medium storing the computer program are provided, wherein the computer program, when executed by one or more processors of an apparatus, causes the apparatus to function as the network node 1 or the server 3. Further, according to the present disclosure, a method executed by the network node 1 for the processing shown in FIG. 3 or FIG. 4, a method executed by the server 3 for the processing shown in FIG. 3 or FIG. 4, and a computer program and a computer readable storage medium storing the computer program for causing the network node 1/server 3 to execute the methods shown in FIG. 3 or FIG. 4 are provided.

The present invention is not limited to the above embodiments, and various changes and modifications can be made within the spirit and scope of the present invention.

This application claims priority from Japanese Patent Application No. 2023-185751 filed October 30, 2023, which is hereby incorporated by reference herein in its entirety.

## Claims

1. A network node of a mobile communication network, comprising:
processing means that performs processes including obtaining intermediate information, which is an output of a first learning model, by using first information collected in the mobile communication network as input to the first learning model, and assigning a first identifier to the intermediate information; and
transmission means that transmits the intermediate information and the first identifier assigned to the intermediate information to a server deployed in an external network of the mobile communication network.

2. The network node according to claim 1, further comprising
reception means that receives error information and the first identifier assigned to the error information from the server, wherein
the processing means determines, based on the first identifier assigned to the error information, which of a plurality of pieces of intermediate information transmitted to the server corresponds to the error indicated by the error information.

3. The network node according to claim 2, wherein
the server subscribes to a service provided by the network node, and performs inference by using the intermediate information as input to a second learning model, and
the error of the intermediate information is based on an error of the inference.

4. The network node according to claim 3, wherein
the first learning model is received from the server in response to a request message that is transmitted to the server and that includes a second identifier identifying the subscription.

5. The network node according to claim 3, wherein
the first learning model is received from the server together with a second identifier identifying the subscription.

6. The network node according to claim 3, wherein
the second learning model is transmitted to the server in response to receiving, from the server, a request message including a second identifier identifying the subscription.

7. The network node according to claim 3, wherein
the second learning model is transmitted to the server together with a second identifier identifying the subscription.

8. The network node according to any one of claims 1 to 7, wherein
the network node is a node implementing a Network Data Analytics Function (NWDAF).

9. A computer readable storage medium storing a program which, when executed by one or more processors of an apparatus, causes the apparatus to function as the network node according to any one of claims 1 to 8.

10. A server that performs subscription to a service provided by a network node of a mobile communication network, comprising:
reception means that receives, from the network node, intermediate information output by a first learning model by using first information collected in the mobile communication network as input to the first learning model, and a first identifier assigned to the intermediate information;
processing means that performs processes including performing inference by using the intermediate information and second information as input to a second learning model, updating the second learning model based on an error of the inference, and determining an error of the intermediate information; and
transmission means that transmits, to the network node, error information indicating the error of the intermediate information and the first identifier assigned to the intermediate information.

11. The server according to claim 10, wherein
the second learning model is received from the network node in response to a request message that is transmitted to the network node and that includes a second identifier identifying the subscription.

12. The server according to claim 10, wherein
the second learning model is received from the network node together with a second identifier identifying the subscription.

13. The server according to claim 10, wherein
the first learning model is transmitted to the network node in response to receiving, from the network node, a request message including a second identifier identifying the subscription.

14. The server according to claim 10, wherein
the first learning model is transmitted to the network node together with a second identifier identifying the subscription.

15. A computer readable storage medium storing a program which, when executed by one or more processors of an apparatus, causes the apparatus to function as the server according to any one of claims 10 to 14.
